# EUROPEAN PATENT SPECIFICATION

(11) **EP 3 505 322 B1**
(45) Date of publication and mention of the grant of the patent: **10.02.2021**
(21) Application number: 18208793.2
(22) Date of filing: 28.11.2018
(51) Int. Cl.: B29C 31/10, B65G 53/56, B29B 7/24, B29B 7/60, B65G 53/52

(54) **DISTRIBUTING APPARATUS FOR SOLID PARTICLES LIKE GRANULES**
VERTEILVORRICHTUNG FÜR FESTSTOFFPARTIKEL WIE BEISPIELSWEISE GRANULAT
APPAREIL DE DISTRIBUTION POUR PARTICULES SOLIDES COMME DES GRANULÉS

(30) Priority: 27.12.2017 IT 201700149978
(43) Date of publication of application: 03.07.2019
(60) Divisional application: 20204600.9
(73) Proprietor: Piovan S.P.A., 30036 Santa Maria di Sala (VE) (IT)
(72) Inventor: BELLIO, Enrico, 31050 Ponzano V.to (TV) (IT); RONZONE, Riccardo, 30174 Venezia (IT)
(74) Representative: Villanova, Massimo

(56) References cited:
- EP-A1- 0 995 703
- DE-A1- 2 436 595
- DE-A1- 4 406 545
- DE-A1-102009 011 605
- DE-B1- 1 756 039
- JP-A- H0 694 144
- JP-A- 2002 154 653
- SU-A1- 695 923
- US-A1- 2015 345 648

## Description

### Background of the invention

The invention relates to a distributing apparatus, in particular for the distribution of solid particles of loose material, such as for example granule, powder, grain material, etc, in particular granules of plastics.

Specifically but not exclusively, the invention may be applied in the plastics transforming industry in order to supply one or more processors (suitable for processing plastics) with materials coming, selectively, from a plurality of sources (containers of granules of plastics).

The distributing apparatus in question, or sorting apparatus, enables, in particular, a plurality of inlet conduits (for example pipes connected to sources of granules of plastics) to be placed in communication with a plurality of outlet conduits (for example pipes connected to the processors of the granules of plastics, in particular to inlet hoppers arranged on processing machines - presses, extruders, etc - or systems for dehumidifying and/or mixing granules).

In particular, reference is made to a distributing apparatus with two manifolds each comprising various ports for the passage of the plastics in which the ports of one manifold are connected to several sources of material (containers of plastics) and the ports of the other manifold are connected to several processors (processing apparatuses). The two manifolds are connected together by a conduit portion in common that can assume various configurations so as to selectively place in communication a port of one manifold with a port of the other manifold, depending on which processor is to be supplied each time and the source to be connected to the processor. The conduit portion in common acts, substantially, as a selector that is movable in a controlled manner to modify the connection between the various ports of the two manifolds.

One of the problems of the prior art is to produce objects with different plastics and/or with different colours, with the consequent need to selectively connect the conduits coming from the various storage zones (containers) of the various granules to the sucking means for the pneumatic transport of the granules.

A known system for automating the aforesaid connection is disclosed in Italian patent IT 1253317 that shows an automatic sorting processor for sorting granules of plastics comprising two manifold disks that are opposite and parallel to one another, in which a fixed manifold disk supports a series of pipes arranged in a circumference and connected to the storage zones of the granules, and a movable manifold disk supports a tube provided with a sliding joint and connected to the suction pumps that supply the various machine processors; the movable manifold disk rotates around a central axis thereof in such a manner as to enable the sliding joint to connect, selectively, to an end of one of the tubes supported by the fixed manifold disk.
**SU** 695 923 A1 **discloses a distributing apparatus comprising valve means arranged on a port for the passage of material.**
DE 44 06 545 A1 **discloses an apparatus as in the preamble of claim 1.**

One of the drawbacks of the known distributing apparatuses is the risk of contamination of the transport portion in common. This contamination is caused, for example, by a residue of plastics of a certain type (for example granules of a dark colour) that may remain entrapped in the transport portion in common after a processing cycle and may mix with plastics of another type (for example granules of a light colour) in the subsequent processing cycle, compromising the quality of the product that is obtainable with the contaminated material.

Another drawback is the risk of a residue of plastics in granules falling during the step of movement of the transport portion in common. This residue may remain on a part of the apparatus or enter any passage port of the material, with consequent contamination of the system.

A further drawback is the risk of contamination due to the deposit of dust in various portions of the apparatus, in particular in the transport portion in common that acts as a selector between the various ports.

### Summary of the invention

One object of the invention is to make a distributing apparatus that is able to overcome one or more of the aforesaid drawbacks of the prior art.

One object of the invention is to provide a distributing apparatus for material in solid particles (for example in granules) that can be cleaned rapidly and efficiently to eliminate the risk of contamination.

One advantage is to eliminate, or at least reduce, the risk of contamination, in particular, of the transport portion in common of the apparatus.

One advantage is to provide an apparatus of relatively compact dimensions.

One advantage is to give rise to a distributing apparatus that is able to sort the material from a relatively high number of containers.

One advantage is to enable the material to be sorted into a relatively high number of processors.

One advantage is to make available a distributing apparatus that is constructionally simple and cheap for sorting plastics (in granules) from several sources of the material into one or more processors.

One advantage is to permit the automatic selection of the various conduits connected, on one side, to the various storage zones of the material (containers) and, on the other side, to the various zones of use (processing machines).

These objects and advantages and still others are achieved by the distributing apparatus according to independent claim 1; further preferred embodiments are claimed in the dependent claims.

### Brief description of the drawings

The invention can be better understood and implemented with reference to the attached drawings that illustrate embodiments thereof in which:
Figure 1 shows a vertical raised perspective view of a first embodiment of a distributing apparatus;

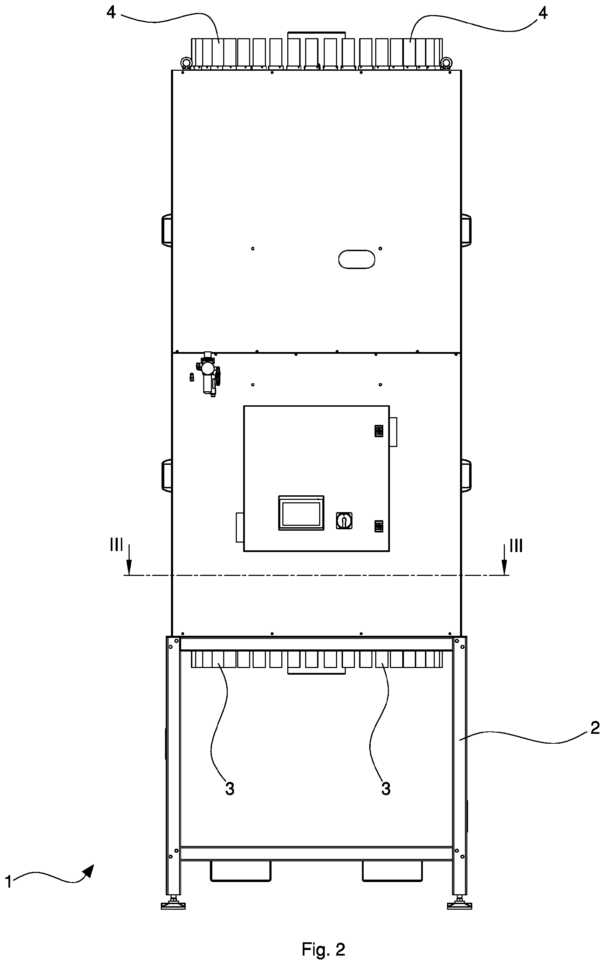

Figure 2 shows a side view of the apparatus of figure 1;
Figure 3 is the section III-III of Figure 2;
Figure 4 shows the section of Figure 3 with the distributing apparatus in a different operating configuration;
Figure 5 is a section of the distributing apparatus of Figure 1 taken along a vertical section plane;

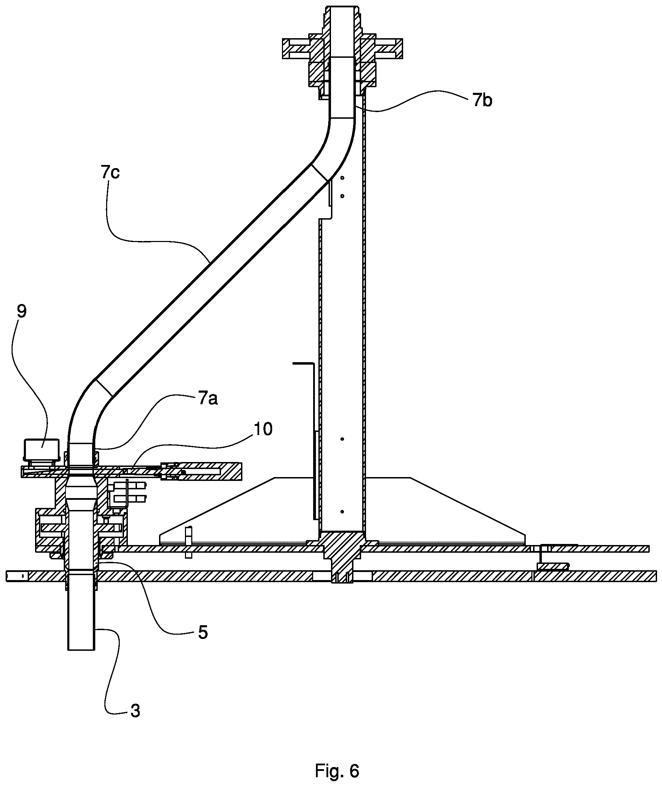

Figure 6 shows a detail of Figure 5;
figure 7 shows an enlarged detail of Figure 6;
Figures 8 and 9 shown the detail of Figure 7 with the first valve arranged in two different operating configurations;
Figure 10 shows an alternative embodiment of the detail of Figure 7;
Figure 11 is a section taken along a vertical section plane of a second embodiment of a distributing apparatus;
Figure 12 shows an enlarged detail of Figure 11;
Figure 13 is a diagram that shows a first cleaning step of the distributing apparatus of
Figure 1;

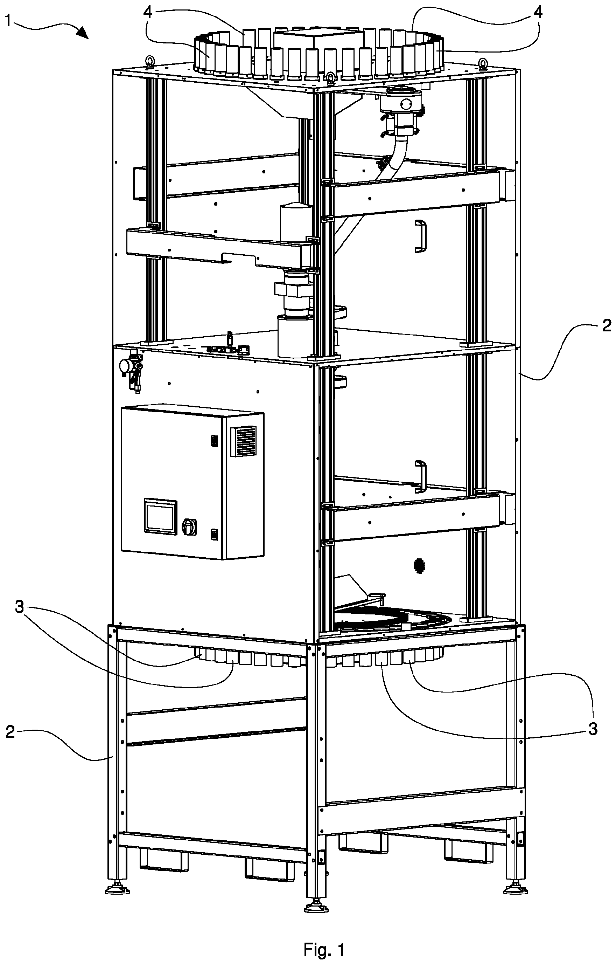

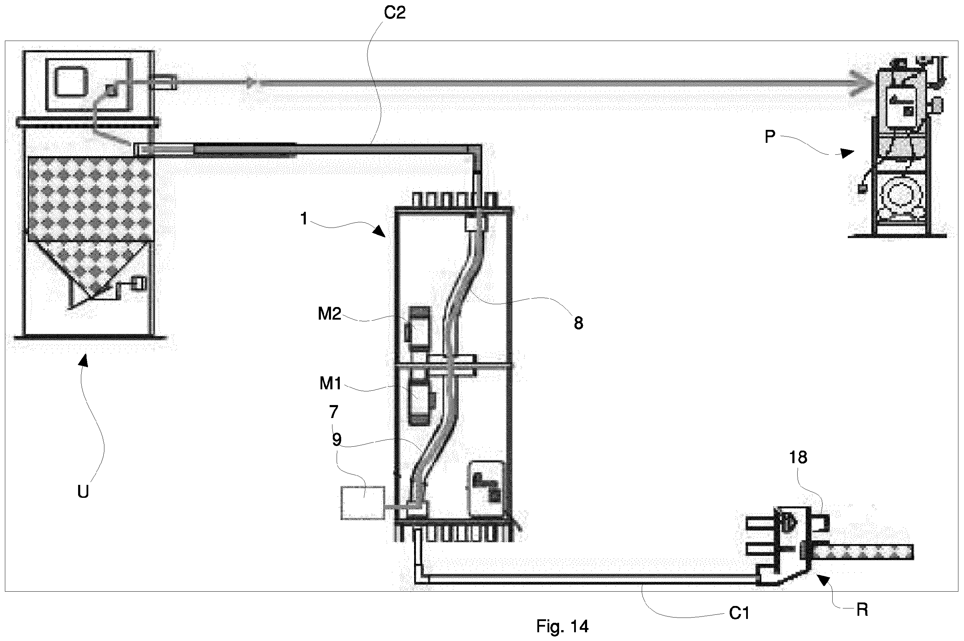

Figure 14 is a diagram that shows an additional cleaning step of the distributing apparatus of Figure 1.

### Detailed description

With reference to the aforesaid figures, for the sake of simplicity of exposition, identical elements of embodiments have been indicated by the same numbering. Overall, 1 indicates a distributing apparatus that operates, substantially, as a sorting processor to connect a plurality of first conduits C1 coming from various containers R or storage zones of material with one or more second conduits C2 that take the material to one or more processors U of the material. The material may comprise, in particular, loose material in solid particles (for example in granules or in powder). The material may comprise, in particular, granules of plastics. The processors U may comprise, in particular, processors of granules of plastics (for example, presses, extruders, dehumidifiers, mixers, etc).

The distributing apparatus 1 may comprise a support frame 2 extending in height (for example comprising four vertical uprights) and suitable, in particular, for supporting at least one first (lower) manifold for the first conduits C1 (sources side) and at least one second (upper) manifold for the second conduits C2 (processors side).

The distributing apparatus 1 comprises, in particular, at least one first manifold comprising a plurality of first ports 3 for the passage of loose material. The first ports 3 are configured for connecting to a plurality of first transport conduits C1 for transporting the loose material. Each first transport conduit C1 may come, in particular, from a source of the loose material, for example from a container of the material. The first manifold may comprise, in particular, a first plate-shaped body, for example in the shape of a circular disk. The first plate-shaped body may be, as in these embodiments, arranged to lie on a horizontal plane.

The distributing apparatus 1 comprises, in particular, at least one second manifold comprising a plurality of second ports 4 for the passage of loose material. The second manifold may be arranged, as in these embodiments, above the first manifold. The second ports 4 are configured for connecting to a plurality of second transport conduits C2 for transporting loose material. Each second transport conduit C2 may be connected to sucking means P (pump), for example operationally associated with at least one respective processor U of the material, to generate a transport flow of the material. Each second transport conduit C2 may be connected, in particular, to a container of a respective processor U of the material. Each second transport conduit C2 may supply, in particular, a processor U of the material, for example a press, an extruder, a dehumidifier, a mixer, etc. The second manifold may comprise, in particular, a second plate-shaped body, for example in the shape of a circular disk. The second plate-shaped body may be, as in these embodiments, arranged to lie on a horizontal plane. The second plate-shaped body may be, as in these embodiments, parallel to the first plate-shaped body.

The first ports 3 may be arranged, as in these embodiments, along a first circumference. The second ports 4 may be arranged, as in these embodiments, along a second circumference. The second circumference may be parallel (and opposite) to the first circumference.

The distributing apparatus 1 comprises, in particular, at least one transport portion for transporting loose material. The transport portion is arranged between the first manifold and the second manifold. The transport portion enables at least one first port 3 of the first manifold to be placed in communication with at least one second port 4 of the second manifold. In particular, the transport portion enables any of the first ports 3 of the first manifold to be placed in communication with any of the second ports 4 of the second manifold.

The transport portion comprises, in particular, at least one first movable mouth 5 with the possibility of adopting selectively a plurality of positions in each of which it is connected to a respective first port 3. The transport portion comprises, in particular, at least one second mouth 6 that is movable at least partially independently of the movement of the first mouth 5, with the possibility of adopting selectively a plurality of positions in each of which it is connected to a respective second port 4. In this manner it is possible to transport the loose material, selectively, between any first port 3 (in turn connected to a respective container R or source of material) and any second port 4 (connected in turn to a respective processor U).

The first mouth 5 may be provided, in particular, with a rotation motion around a rotation axis (for example vertical) that passes through the centres of the first and the second circumference. The rotation axis may be, in particular, orthogonal to the first circumference and/or to the second circumference. The second mouth 6 may be provided, in particular, with a rotation motion around a rotation axis, in particular coinciding with the aforesaid rotation axis.

The transport portion may comprise, as in these embodiments, two conduit portions 7 and 8 communicating with one another and movable at least partially independently of one another. A first conduit portion 7 may comprise, in particular, the first mouth 5. A second conduit portion 8 may comprise, in particular, the second mouth 6.

The first conduit portion 7 may comprise, as in these embodiments, a (lower) peripheral end portion 7a, a central end portion 7b and an intermediate portion 7c that reciprocally connects the peripheral end portion 7a to the central end portion 7b. The peripheral end portion 7a (with vertical axis) may include the first mouth 5. The central end portion 7b (with vertical axis) may be coaxial with the aforesaid rotation axis. The intermediate portion 7c may be arranged obliquely. The central end portion 7b of the first conduit portion may be rotatably coupled with the frame 2 by rotation support means.

The second conduit portion 8 may comprise, as in these embodiments, a central end portion 8a, an (upper) peripheral end portion 8b and an intermediate portion 8c that reciprocally connects the central end portion 8a to the peripheral end portion 8b. The peripheral end portion 8b (with vertical axis) may include the second mouth 6. The central end portion 8a (with vertical axis) may be coaxial with the aforesaid rotation axis. The intermediate portion 8c may be arranged obliquely. The central end portion 8a of the second conduit portion may be coupled rotatably with the frame 2 by rotation support means.

The central end portion 7b of the first conduit portion may be arranged coaxially to the central end portion 8a of the second conduit portion. The central end portion 7b of the first conduit portion may be arranged below the central end portion 8a of the second conduit portion.

The distributing apparatus 1 may comprise, in particular, first motor means M1 to rotate the first conduit portion 7. The first motor means M1 may be connected to the first conduit portion 7 by a first motion transmission mechanism (for example by a toothed belt and at least one gear). The distributing apparatus 1 may comprise, in particular, second motor means M2 (distinct from and/or independent of the first motor means M1) to rotate the second conduit portion 8. The second motor means M2 may be connected to the second conduit portion 8 by a second motion transmission mechanism (for example by a toothed belt and at least one gear).

It is possible to provide one embodiment, which is not shown, in which a sole second port 4 is provided. In this embodiment, the second mouth 6 may be fixed and/or the second conduit portion 8 may be fixed.

The distributing apparatus 1 may comprise, in particular, at least one first auxiliary mouth 9 arranged so as to connect the transport portion to the exterior (to an environment outside the transport portion and/or to an environment outside the distributing apparatus and/or to an environment outside the first mouth 5). The first auxiliary mouth 9 may be arranged on the first conduit portion 7. The first auxiliary mouth 9 may be arranged near the first mouth 5. The first auxiliary mouth 9 may be configured to connect the transport portion directly to the environment outside, as in these embodiments (for example through a filter). In other embodiments that are not illustrated, the first auxiliary mouth 9 may be configured to connect the transport portion to a (pneumatic transport) circuit outside the transport portion and/or outside the distributing apparatus.

The distributing apparatus 1 may comprise, in particular, at least one first valve arranged for operating in the first auxiliary mouth 9. The first valve may comprise, in particular, at least one movable valve body 10.

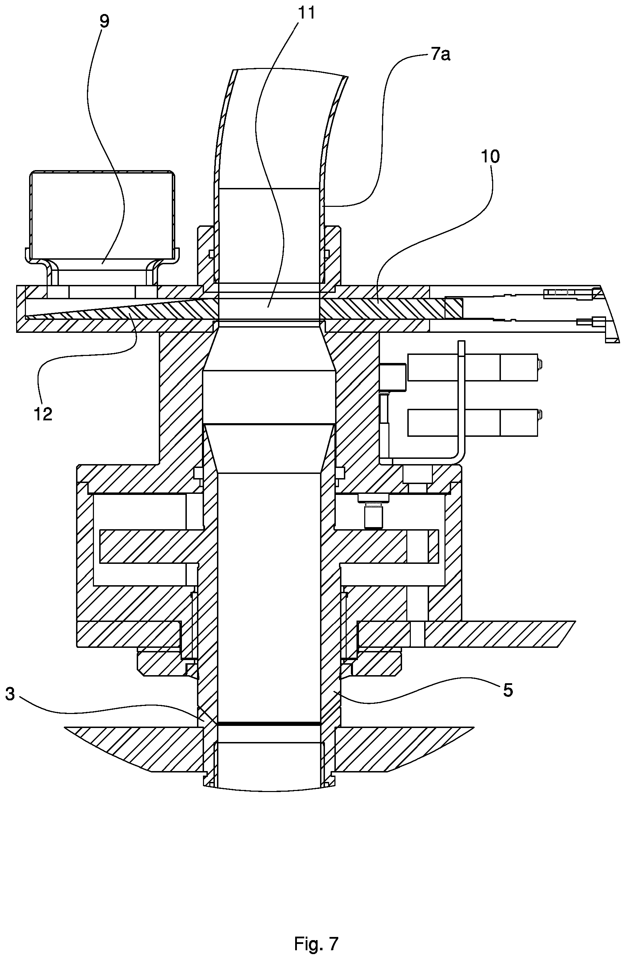

The first valve may be capable of adopting at least one transport position (figure 7) in which the valve body 10 is so configured that the second mouth 6 does not communicate with the first auxiliary mouth 9. In the transport position the valve body 10 is so configured that the second mouth 6 can communicate with the first mouth 5 to permit the transport of loose material along the transport portion between the first mouth 5 and the second mouth 6. In the transport position the valve body 10 is so configured that the second mouth 6 can communicate with the first mouth 5 to permit a possible cleaning flow along the transport portion between the first mouth 5 and the second mouth 6.

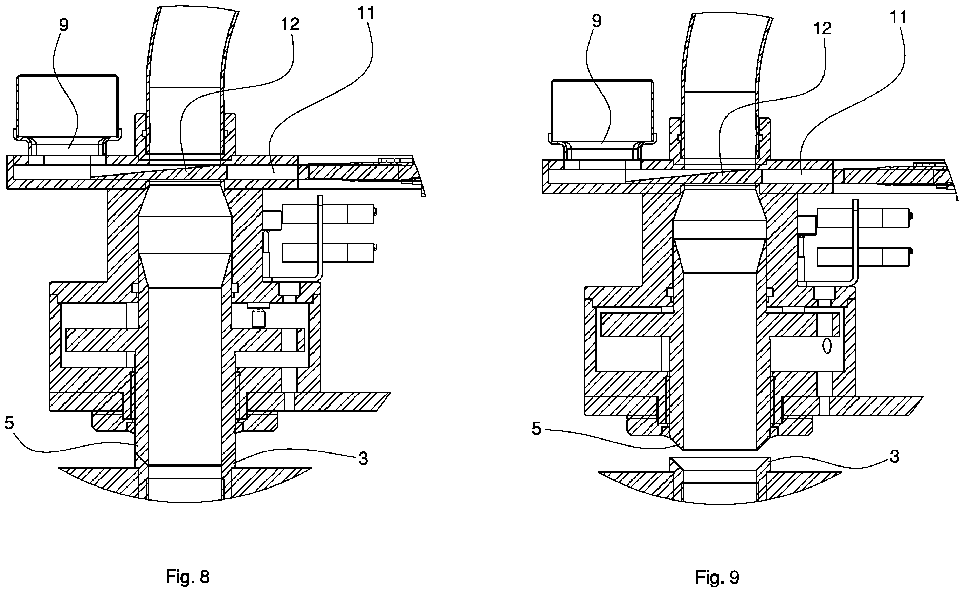

The first valve may be capable of adopting at least one cleaning position (Figures 8 and 9) in which the valve body 10 is so configured that the second mouth 6 communicates with the first auxiliary mouth 9. In the cleaning position the valve body 10 is so configured that the second mouth 6 does not communicate with the first mouth 5 to permit a cleaning flow (additional with respect to the aforesaid possible cleaning flow) along the transport portion with an input at the first auxiliary mouth 9 and a direction to the second mouth 6.

The valve body 10 may be, in particular, flat in shape. The valve body 10 may be provided with a hole 11. In the transport position (figure 7) the hole 11 may be arranged in a passage space of the transport portion, in order that the passage space can remain open. In the cleaning position (figures 8 and 9) the hole 11 may be arranged outside the passage space, in order that the passage space can be closed by the valve body 10.

The first valve may comprise driving means (for example with a fluid drive, in particular a pneumatic linear actuator) to control the movement of the valve body 10 between the transport position and the cleaning position.

The valve body 10 may be movable with a translation motion between the transport position and the cleaning position. In particular, the valve body 10 may be movable with a rectilinear (horizontal) motion direction between the transport position and the cleaning position. The valve body 10 may comprise, in particular, at least one obturator portion 12 that may be configured, as in these embodiments, in such a manner as to obstruct passage space of the transport portion in the cleaning position. The obturator portion 12 may be so configured as not to obstruct the passage space in the transport position.

The obturator portion 12 may have, as in these embodiments, a section that is gradually increasing in the aforesaid motion direction, for example a wedge-shaped section. With reference to the transport position, the obturator portion 12 may have a thickness that is less when distant from the aforesaid passage space and a greater thickness when near the aforesaid passage space.

The first mouth 5 is arranged on a first axially movable tubular body with the possibility of adopting a proximal position (figures 7 and 8), in which it can be sealingly connected in contact with a first port 3 of the first manifold, and a distal position (figure 9), in which it is far from the first port 3, so that movement of the first conduit portion 7 between the various first ports 3 is permitted. It is possible to provide first driving means (in particular a pneumatic linear actuator, as in the illustrated embodiments) to control movements of the first tubular body between the proximal and distal positions.

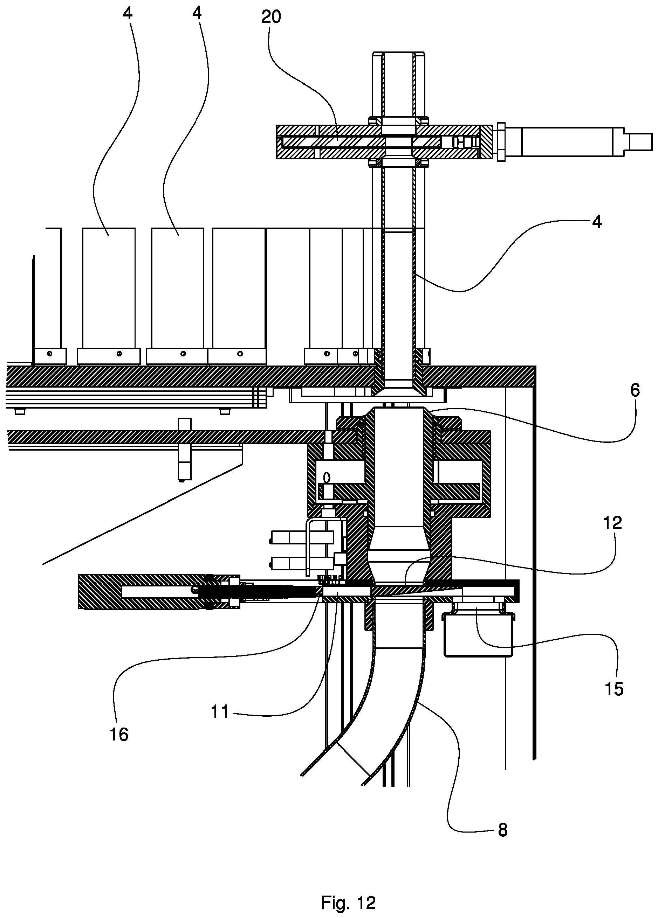

The second mouth 6 may be arranged on a second axially movable tubular body with the possibility of adopting a proximal position, in which it can be sealingly connected in contact with a second port 4 of the second manifold, and a distal position (figure 12), in which it is far from the second port 4, so that movement of the second conduit portion 8 between the various second ports 4 is permitted. It is possible to provide second driving means (in particular a pneumatic linear actuator, as in the examples disclosed here) to control movements of the second tubular body between the proximal and distal positions.

The distributing apparatus 1 may comprise, in particular, programmable electronic control means provided with computer programme instructions. These instructions may comprise, in particular, instructions on performing a cleaning task that includes the steps of positioning the first valve in the cleaning position and driving means (for example sucking means P) to generate a cleaning flow between the first auxiliary mouth 9 and the second mouth 6.

The transport portion may comprise, in particular, at least one first Venturi tube 13 arranged between the first valve and the second mouth 6. The first Venturi tube 13 may be arranged, as in this embodiment, in the second (upper) conduit portion 8, for example near the second mouth 6. The first Venturi tube 13 may be used, in particular, to increase the sucking effect, especially in the steps of cleaning the transport portion.

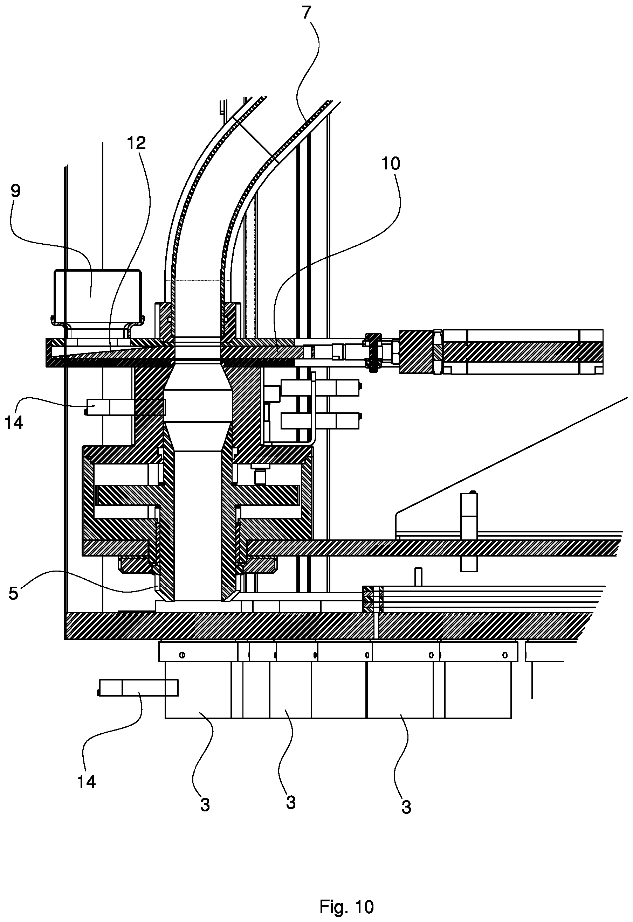

The distributing apparatus 1 may comprise, in particular, at least one sensor 14 for detecting the presence of the loose material arranged in the transport portion. In particular, with reference to the embodiment of Figure 10, this sensor 14 for detecting the presence of material may be arranged inside the transport portion between the first valve and the first mouth 5. In particular, still with reference to the embodiment of Figure 10, the distributing apparatus 1 may comprise at least one sensor 14 for detecting the presence of the loose material (in addition or alternatively to the other presence-detecting sensor 14) arranged in at least one first mouth 3.

The programmable electronic control means may be provided with computer programme instructions that give consent to drive the movement of the first conduit portion 7 (and/or of the second conduit portion 8) only if the presence of material is not detected (in particular after performing scheduled maintenance tasks).

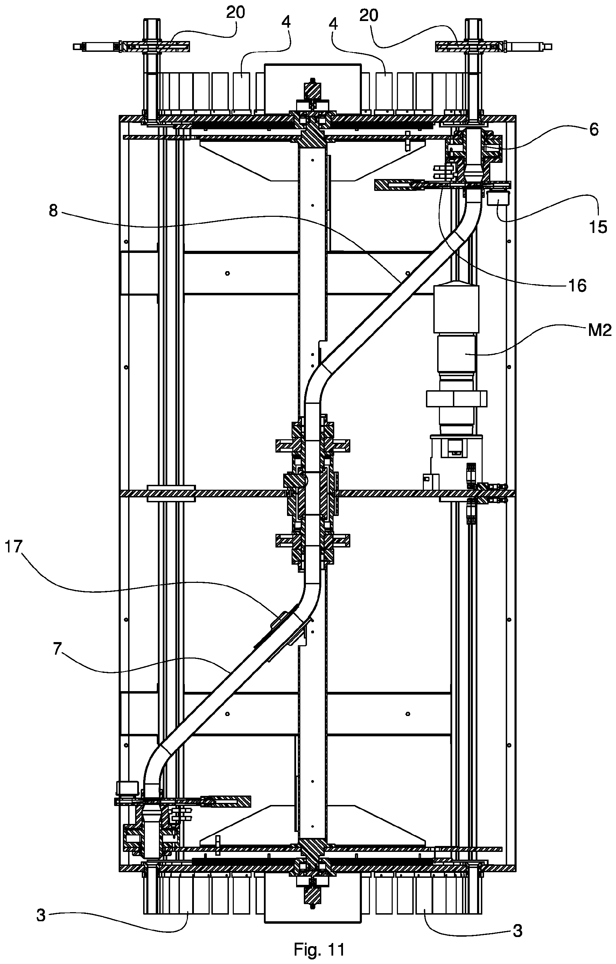

Reference is now made to the embodiment of Figures 11 and 12, in which the transport flow and the cleaning flows can occur, in particular, from top to bottom, whereas in the embodiment of Figure 1 the transport flow and the cleaning flows can occur, in particular, from bottom to top. In this case the second (upper) manifold is the input manifold connected to the side of the storage containers R of the material and the first (lower) manifold is the outlet manifold connected to the side of the processors U of the material.

The distributing apparatus 1 may comprise, in particular, at least one second auxiliary mouth 15 arranged so as to connect the transport portion with the exterior. The second auxiliary mouth 15 may be arranged, in particular, on the second conduit portion 8. The second auxiliary mouth 15 may be arranged near the second mouth 6. The distributing apparatus 1 may comprise, in particular, at least one second valve, comprising a second valve body 16 movable on driving, arranged for operating in the second auxiliary mouth 15.

The second valve may be capable of adopting at least one transport position in which the first mouth 5 does not communicate with the second auxiliary mouth 15 and communicates with the second mouth 6 to permit the transport of loose material along the transport portion between the second mouth 6 and the first mouth 5 and/or to permit a possible cleaning flow between the second mouth 6 and the first mouth 5.

The second valve may be capable of adopting at least one cleaning position in which the first mouth 5 communicates with the second auxiliary mouth 15 and does not communicate with the second mouth 6 to permit a cleaning flow (additional with respect to the aforesaid possible cleaning flow) along the transport portion between the second auxiliary mouth 15 and the first mouth 5.

The transport portion may comprise, in particular, at least one second Venturi tube 17 arranged on the first conduit portion 7 (between the second valve and the first mouth 5) to increase the sucking effect, especially in the steps of cleaning the transport portion.

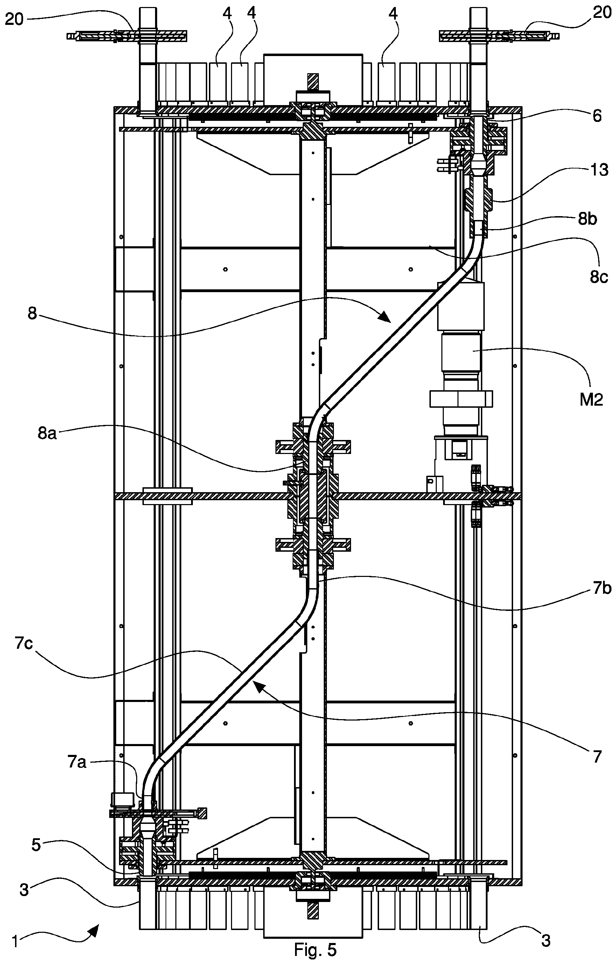

The distributing apparatus comprises, in particular, for at least one or for each of the aforesaid first ports 3 and/or for at least one or for each of the second ports 4, valve means (at least one movable obturator member) arranged for selectively opening or closing the respective first port 3 and/or the respective second port 4. In the embodiments of Figures 5 and 11 valve means 20 is arranged in the second ports 4, in particular valve means 20 for each of the second ports 4. This valve means 20 may comprise, in particular, at least one movable obturator member between a closed position, in which it closes the respective second port 4, and an open position, in which it leaves the respective second port 4 open. The obturator member may comprise a gate that is movable linearly. The movable obturator member may be driven by a (linear) actuator. The movable shutter member may comprise a hole that, when the member is in an open position, is positioned at the passage space of the conduit. This valve means 20 may be closed before moving the transport portion between the various mouths 3 and 4, to reduce the undesired dispersion of material inside the apparatus 1.

In particular, the electronic control means may be provided with computer programme instructions that close the aforesaid valve means of at least one part of the (or all the) first ports 3 and/or second ports 4 during the movements of the first conduit portion 7 and/or of the second conduit portion 8.

It is possible to provide embodiments in which the distributing apparatus comprises, in particular, for at least one or for each of the aforesaid first ports 3 and/or for at least one or for each of the second ports 4, at least one sensor 14 for detecting the presence of the loose material, so as to report possible irregular situations when at least one of these sensors reports the undesired presence of loose material in at least one first port 3 and/or in at least one second port 4.

The distributing apparatus 1 may comprise, in particular (see Figure 10), a sensor 14 arranged on the first conduit portion 7 and/or a sensor 14 arranged in at least one first port 3. In the embodiment of Figure 10 two sensors 14 are illustrated, one on the first conduit portion 7 and the other in a first port 3. In other embodiments it is possible to arrange only the one or the other of the two sensors 14. In other embodiments it is possible to arrange at least one sensor 14 for each first port 3.

The distributing apparatus 1 may comprise, in particular, a pressure sensor (which is not shown) arranged for detecting the pressure in at least one of the conduit portions 7 and 8 (for example in the portion 7b and/or in the portion 8a), or in another portion of the transport path that leads to the sucking means P, or in the sucking means P itself. The electronic control means may be programmed in such a manner as to emit a fault signal (presence of residual material in the distributing apparatus) if the pressure sensor detects a pressure value outside a preset permitted range of pressure values (for example too low a value) during the material transport (loading) step. Too great a vacuum could signify clogging of the conduits. In this case, it is possible to program the control means in such a manner as to perform further cleaning of the apparatus.

The operation of the distributing apparatus of figure 1 is as follows.

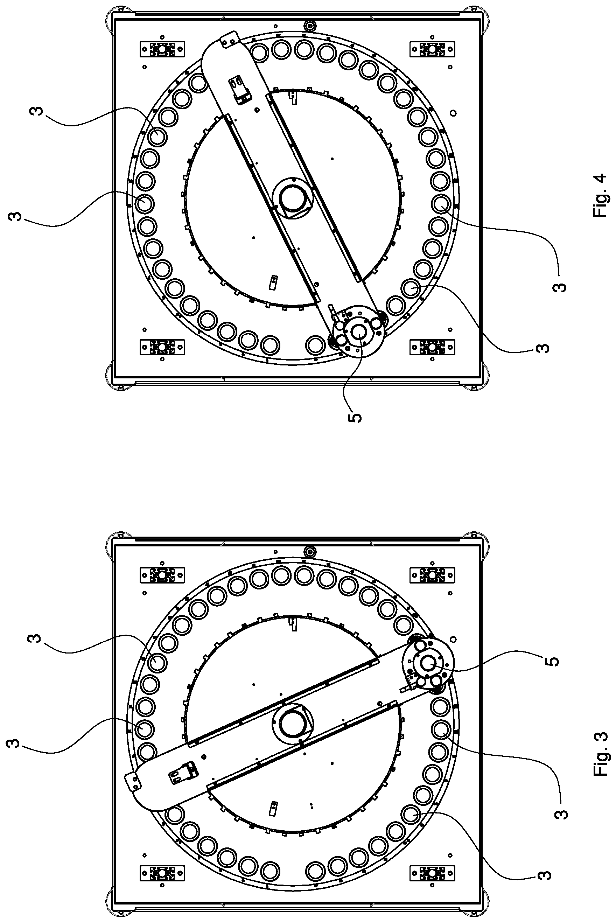

At the start of a loading cycle for loading a specific material onto a specific processor, the first mouth 5 of the first (rotating) movable conduit portion 7 is positioned at the first port 3 connected to the piping (first conduit C1) that comes from the container R of the desired material (in Figures 3 and 4 two possible positions are illustrated of the first mouth 5) driving the first motor means M1. Similarly, the second mouth 6 of the second movable (rotating) conduit portion 8 is positioned at the second port 4 connected to the piping (second conduit C2) that goes to the desired processor U by driving a second motor means M2. During these positionings, the first mouth 5 has the respective first tubular body in a distal (open) position and the second mouth 6 has the respective second tubular body in a distal (open) position.

Once the desired positioning of the first conduit portion 7 and of the second conduit portion 8 has been carried out, the first mouth 5 and the second mouth 6 are sealingly coupled with the respective ports 3 and 4 and the first and second manifold, moving the first tubular body and the second tubular body to the respective proximal (closed) positions, after which (by controlling the valve means 20 of the second port 4, if present, in the open position) it will be possible to drive the means (sucking means P) to generate the transport flow of the material. The material (granules of plastics) will be thus removed from the container R to reach the processor U, passing through the transport portion of the distributing apparatus 1.

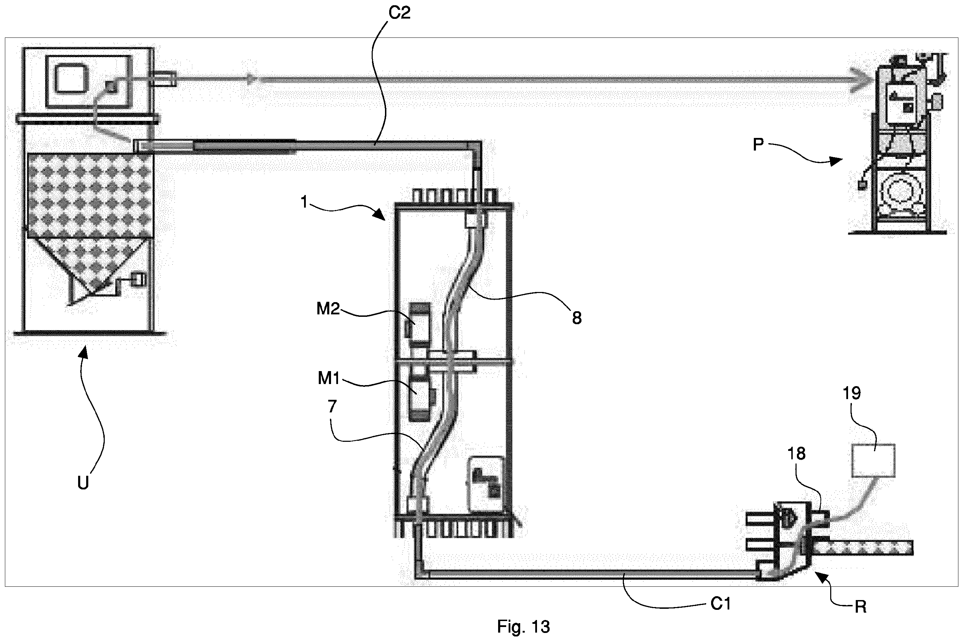

After loading the material, first cleaning of the distributing apparatus (Figure 13) can be carried out by generating a flow of air that is passed, without material, through the two conduit portions 7 and 8. In this first cleaning step, the first valve (and/or the second valve) is maintained in the transport position (Figure 7) and the first mouth 5 is maintained in the proximal position (Figure 7). A cleaning valve 18 may be provided at the start of the pipe (i.e. of the first conduit C1) that comes from the container R of the material to connect the pipe to an air inlet 19 and thus enables the pipe to be emptied (first conduit C1).

This first cleaning operation might not be sufficient to ensure the complete elimination of any residue of material (granules in plastics) by the distributing apparatus. It is thus possible to provide a second cleaning operation, which is additional to the first, in which however the cleaning flow (air) does not enter through the first port 3 of the first manifold, but enters through the first auxiliary mouth 9 (see Figure 14) that is associated with the first conduit portion 7. In this additional cleaning step, the first valve (and/or the second valve) is moved to the cleaning position (Figure 8) in which it closes the first mouth 5 and the first mouth 5 is maintained in the proximal position (Figure 8).

Once the additional cleaning has been performed, the electronic control means can give consent to the subsequent movement of the first conduit portion 7 (and/or of the second conduit portion 8), i.e. in function of the signal received from the sensor means (sensor 14) that detects the presence of material (in particular in the first conduit portion 7) and/or of the signal received from the pressure sensor means that detects possible faulty pressure value (for example an excessive vacuum or a value outside a preset acceptable range of values), to be able to perform the subsequent processing cycle, in the absence of undesired residual material inside the apparatus. Before driving the aforesaid movement, the electronic control means may reclose the valve means 20 (if present) of the second port 4 and/or the valve means (if present) of the first port 3.

The operation of the embodiment of Figure 11 is similar, with the main difference that the flow of material and the cleaning flows occur from top to bottom rather than from bottom to top as in the preceding embodiment.

## Claims

1. Distributing apparatus (1) comprising:
- at least one first manifold comprising a plurality of first ports (3) for the passage of material;
- at least one second manifold comprising a plurality of second ports (4) for the passage of material;
- at least one transport portion (7; 8) for transporting material, said at least one transport portion comprising at least one first mouth (5) that is movable with the possibility of selectively assuming a plurality of positions in each of which is connected to a respective first port (3), said at least one transport portion comprising at least one second mouth (6) that is movable with the possibility of selectively assuming a plurality of positions in each of which is connected to a respective second port (4), to allow passage of material, selectively, between any first port (3) and any second port (4);
- valve means (20) arranged to selectively open or close at least one of said second ports (4) and/or valve means arranged to selectively open or close at least one of said first ports (3);
***characterized in that*** said first mouth (5) is arranged on a tubular body that is axially movable with the possibility of assuming a proximal position, in which it can be sealingly connected in contact with a first port (3) of said first collector, and a distal position, in which it is distant from said first port (3).

2. Apparatus according to claim 1, wherein said valve means (20) is arranged in each of said second ports (4) to selectively open or close the respective second port (4) and/or in each of said first ports (3) to selectively open or close the respective first port (3).

3. Apparatus according to claim 1 or 2, wherein said valve means (20) comprises at least one obturator member provided with a hole and movable between an opening position, in which said hole is arranged in the respective second port (4) in correspondence a material passage opening, and a closed position, in which said obturator member obstructs said passage opening.

4. Apparatus according to any one of the preceding claims, wherein said transport portion comprises two conduit portions (7; 8) mutually communicating and movable independently of each other, of which a first conduit portion (7) comprises said first mouth (5) and a second conduit portion (8) comprises said second mouth (6).

5. Apparatus according to any one of the preceding claims, wherein said at least one transport portion comprises at least one first Venturi tube (13) arranged in said second conduit portion (8).

6. Apparatus according to any one of the preceding claims, wherein said first ports (3) are arranged along a first circumference and wherein said second ports (4) are arranged along a second circumference that is parallel to said first circumference, said first mouth (5) being provided with a rotation motion around a rotation axis which passes through the centers of said first and second circumferences and which is orthogonal to said first and second circumferences, said second mouth (6) being provided with a rotation motion around said rotation axis.

7. Apparatus according to claim 6, wherein said at least one transport portion comprises at least one second Venturi tube (17) arranged in said first conduit portion (7).

8. Apparatus according to any one of the preceding claims, comprising sensor means (14) for detecting the presence of material arranged in said transport portion (7; 8) and/or sensor means (14) for detecting the presence of material arranged in at least one or each of said first ports (3) and/or in at least one or each of said second ports (4).

9. Apparatus according to any one of the preceding claims, comprising pressure sensor means arranged in an area of passage of the material and/or in proximity of means (P) for generating a cleaning flow in said transport portion (7; 8) and/or in proximity of means (P) for transporting the material, to emit a pressure signal that is used by control means of the distributing apparatus to detect an anomalous situation.

## Patentansprüche

1. Verteilungsvorrichtung (1), die umfasst:
- mindestens einen ersten Rohrverteiler mit einer Vielzahl von ersten Kanälen (3) für den Durchgang von Material;
- mindestens einen zweiten Rohrverteiler mit einer Vielzahl von zweiten Kanälen (4) für den Durchgang von Material;
- mindestens einen Transportabschnitt (7; 8) zum Transportieren von Material, wobei der mindestens eine Transportabschnitt mindestens eine erste Mündung (5) umfasst, die mit der Möglichkeit der selektiven Annahme einer Vielzahl von Positionen beweglich ist, in jeder von denen sie mit einem jeweiligen ersten Kanal (3) verbunden ist, wobei der mindestens eine Transportabschnitt mindestens eine zweite Mündung (6) umfasst, die mit der Möglichkeit der selektiven Annahme einer Vielzahl von Positionen beweglich ist, in jeder von denen sie mit einem jeweiligen zweiten Kanal (4) verbunden ist, um den Durchgang von Material selektiv zwischen irgendeinem ersten Kanal (3) und irgendeinem zweiten Kanal (4) zu ermöglichen;
- eine Ventileinrichtung (20), die dazu beschaffen ist, selektiv mindestens einen der zweiten Kanäle (4) zu öffnen oder zu schließen, und/oder eine Ventileinrichtung, die dazu beschaffen ist, selektiv mindestens einen der ersten Kanäle (3) zu öffnen oder zu schließen;
**dadurch gekennzeichnet, dass** die erste Mündung (5) an einem röhrenförmigen Körper angeordnet ist, der mit der Möglichkeit der Annahme einer proximalen Position, in der er abdichtend in Kontakt mit einem ersten Kanal (3) des ersten Sammlers verbunden sein kann, und einer distalen Position, in der er vom ersten Kanal (3) entfernt ist, axial beweglich ist.

2. Vorrichtung nach Anspruch 1, wobei die Ventileinrichtung (20) in jedem der zweiten Kanäle (4), um selektiv den jeweiligen zweiten Kanal (4) zu öffnen oder zu schließen, und/oder in jedem der ersten Kanäle (3), um selektiv den jeweiligen ersten Kanal (3) zu öffnen oder zu schließen, angeordnet ist.

3. Vorrichtung nach Anspruch 1 oder 2, wobei die Ventileinrichtung (20) mindestens ein Verschlusselement umfasst, das mit einem Loch versehen ist und zwischen einer Öffnungsposition, in der das Loch in dem jeweiligen zweiten Kanal (4) in Übereinstimmung mit einer Materialdurchgangsöffnung angeordnet ist, und einer geschlossenen Position, in der das Verschlusselement die Durchgangsöffnung versperrt, beweglich ist.

4. Vorrichtung nach einem der vorangehenden Ansprüche, wobei der Transportabschnitt zwei Leitungsabschnitte (7; 8) umfasst, die miteinander in Verbindung stehen und unabhängig voneinander beweglich sind, von denen ein erster Leitungsabschnitt (7) die erste Mündung (5) umfasst und ein zweiter Leitungsabschnitt (8) die zweite Mündung (6) umfasst.

5. Vorrichtung nach einem der vorangehenden Ansprüche, wobei der mindestens eine Transportabschnitt mindestens ein erstes Venturi-Rohr (13) umfasst, das im zweiten Leitungsabschnitt (8) angeordnet ist.

6. Vorrichtung nach einem der vorangehenden Ansprüche, wobei die ersten Kanäle (3) entlang eines ersten Umfangs angeordnet sind und wobei die zweiten Kanäle (4) entlang eines zweiten Umfangs angeordnet sind, der zum ersten Umfang parallel ist, wobei die erste Mündung (5) mit einer Drehbewegung um eine Drehachse versehen ist, die durch die Zentren des ersten und des zweiten Umfangs verläuft und die zum ersten und zum zweiten Umfang orthogonal ist, wobei die zweite Mündung (6) mit einer Drehbewegung um die Drehachse versehen ist.

7. Vorrichtung nach Anspruch 6, wobei der mindestens eine Transportabschnitt mindestens ein zweites Venturi-Rohr (17) umfasst, das im ersten Leitungsabschnitt (7) angeordnet ist.

8. Vorrichtung nach einem der vorangehenden Ansprüche mit einer Sensoreinrichtung (14) zum Detektieren der Anwesenheit von Material, das im Transportabschnitt (7; 8) angeordnet ist; und/oder einer Sensoreinrichtung (14) zum Detektieren der Anwesenheit von Material, das in mindestens einem oder jedem der ersten Kanäle (3) und/oder in mindestens einem oder jedem der zweiten Kanäle (4) angeordnet ist.

9. Vorrichtung nach einem der vorangehenden Ansprüche mit einer Drucksensoreinrichtung, die in einem Bereich des Durchgangs des Materials und/oder in der Nähe einer Einrichtung (P) zum Erzeugen einer Reinigungsströmung im Transportabschnitt (7; 8) und/oder in der Nähe einer Einrichtung (P) zum Transportieren des Materials angeordnet ist, um ein Drucksignal auszusenden, das durch eine Steuereinrichtung der Verteilungsvorrichtung verwendet wird, um eine anomale Situation zu detektieren.

## Revendications

1. Appareil de distribution (1) comprenant :
- au moins un premier collecteur comprenant une pluralité de premiers orifices (3) pour le passage de matériau ;
- au moins un deuxième collecteur comprenant une pluralité de deuxièmes orifices (4) pour le passage de matériau ;
- au moins une partie de transport (7 ; 8) pour transporter du matériau, ladite au moins une partie de transport comprenant au moins une première ouverture (5) qui est mobile avec la possibilité d'adopter sélectivement une pluralité de positions dans chacune desquelles elle est reliée à un premier orifice (3) respectif, ladite au moins une partie de transport comprenant au moins une deuxième ouverture (6) qui est mobile avec la possibilité d'adopter sélectivement une pluralité de positions dans chacune desquelles elle est reliée à un deuxième orifice (4) respectif, pour permettre le passage de matériau, sélectivement, entre tout premier orifice (3) et tout deuxième orifice (4) ;
- des moyens à vanne (20) disposés pour ouvrir ou fermer sélectivement l'un au moins desdits deuxièmes orifices (4) et/ou des moyens à vanne disposés pour ouvrir ou fermer sélectivement l'un au moins desdits premiers orifices (3) ;
***caractérisé en ce que*** ladite première ouverture (5) est disposée sur un corps tubulaire qui est mobile axialement avec la possibilité d'adopter une position proximale dans laquelle il peut être relié de manière étanche en contact avec un premier orifice (3) dudit premier collecteur, et une position distale dans laquelle il est éloigné dudit premier orifice (3).

2. Appareil selon la revendication 1, dans lequel lesdits moyens à vanne (20) sont disposés dans chacun desdits deuxièmes orifices (4) pour ouvrir ou fermer sélectivement le deuxième orifice (4) respectif et/ou dans chacun desdits premiers orifices (3) pour ouvrir ou fermer sélectivement le premier orifice (3) respectif.

3. Appareil selon la revendication 1 ou 2, dans lequel lesdits moyens à vanne (20) comprennent au moins un organe obturateur pourvu d'un trou et mobile entre une position d'ouverture, dans laquelle ledit trou est disposé dans le deuxième orifice (4) respectif correspondant à une ouverture de passage de matériau, et une position fermée, dans laquelle ledit organe obturateur obstrue ladite ouverture de passage.

4. Appareil selon l'une quelconque des revendications précédentes, dans lequel ladite partie de transport comprend deux parties de conduit (7 ; 8) communiquant mutuellement et mobiles indépendamment l'une de l'autre, parmi lesquelles une première partie de conduit (7) comprend ladite première ouverture (5) et une deuxième partie de conduit (8) comprend ladite deuxième ouverture (6).

5. Appareil selon l'une quelconque des revendications précédentes, dans lequel ladite au moins une partie de transport comprend au moins un tube de Venturi (13) disposé dans ladite deuxième partie de conduit (8).

6. Appareil selon l'une quelconque des revendications précédentes, dans lequel lesdits premiers orifices (3) sont disposés le long d'une première circonférence et dans lequel lesdits deuxièmes orifices (4) sont disposés le long d'une deuxième circonférence qui est parallèle à ladite première circonférence, ladite première ouverture (5) étant pourvue d'un mouvement de rotation autour d'un axe de rotation qui passe à travers les centres desdites première et deuxième circonférences et qui est orthogonal auxdites première et deuxième circonférences, ladite deuxième ouverture (6) étant pourvue d'un mouvement de rotation autour dudit axe de rotation.

7. Appareil selon la revendication 6, dans lequel ladite au moins une partie de transport comprend au moins un deuxième tube de Venturi (17) disposé dans ladite première partie de conduit (7).

8. Appareil selon l'une quelconque des revendications précédentes, comprenant des moyens à capteur (14) pour détecter la présence de matériau disposés dans ladite partie de transport (7 ; 8) et/ou des moyens à capteur (14) pour détecter la présence de matériau disposés dans au moins un ou chacun desdits premiers orifices (3) et/ou dans au moins un ou chacun desdits deuxièmes orifices (4).

9. Appareil selon l'une quelconque des revendications précédentes, comprenant des moyens à capteur de pression disposés dans une zone de passage du matériau et/ou à proximité de moyens (P) pour générer un écoulement de nettoyage dans ladite partie de transport (7 ; 8) et/ou à proximité de moyens (P) pour transporter le matériau, pour émettre un signal de pression qui est utilisé par des moyens de commande de l'appareil de distribution pour détecter une situation anormale.
